Europäisches Patentamt

European Patent Office

Office européen des brevets

(19)

(11) Numéro de publication : **0 321 346 B1**

(12) **FASCICULE DE BREVET EUROPEEN**

(45) Date de publication du fascicule du brevet :
29.05.91 Bulletin 91/22

(51) Int. Cl.⁵ : **F16B 33/02**

(21) Numéro de dépôt : **88403195.6**

(22) Date de dépôt : **15.12.88**

(54) **Elément fileté perfectionné formant par exemple une vis, et assemblage de pièces réalisé à l'aide de cet élément.**

(30) Priorité : **18.12.87 FR 8717774**

(43) Date de publication de la demande :
**21.06.89 Bulletin 89/25**

(45) Mention de la délivrance du brevet :
**29.05.91 Bulletin 91/22**

(84) Etats contractants désignés :
**AT BE CH DE ES GB GR IT LI LU NL SE**

(56) Documents cités :
**DE-U- 1 952 617
US-A- 3 433 117
US-A- 3 455 587
US-A- 4 040 327
US-A- 4 549 754**

(73) Titulaire : **SIMMONDS S.A.
5 rue Michelet
F-92152 Suresnes Cédex (FR)**

(72) Inventeur : **Frèrejacques, Jean-Claude
Route de Nogent-le-Bernard
F-72580 Saint-Cosme-en-Vairais (FR)**

(74) Mandataire : **Durand, Yves Armand Louis et al
Cabinet Z. Weinstein 20, Avenue de Friedland
F-75008 Paris (FR)**

EP 0 321 346 B1

Jouve, 18, rue Saint-Denis, 75001 PARIS

## Description

La présente invention a essentiellement pour objet un élément fileté perfectionné, tel que par exemple un élément fileté mâle formant une vis.

Elle vise également un assemblage de pièces quelconques, réalisé à l'aide d'un tel élément fileté.

On sait depuis longtemps qu'un filetage hélicoïdal comporte un fond qui peut présenter, en section suivant un plan contenant l'axe de l'élément fileté, une forme arrondie ou en arc de cercle se raccordant tangentiellement aux flans du filetage, comme cela apparaît dans les documents US-A-3 433 117 et US-A-4 040 327.

Or, dans un assemblage réalisé à l'aide de tels éléments filetés, il se produit à la longue ou lorsque l'assemblage est sollicité par des forces extérieures, des contraintes qui se situent dans l'élément fileté au niveau du fond arrondi du filet. De telles contraintes nuisent évidemment à la sécurité de l'assemblage et peuvent même aller jusqu'à provoquer des ruptures de l'élément fileté et donc la désolidarisation des pièces assemblées.

La présente invention a pour but de remédier à ces inconvénients en proposant un élément fileté dont le fond du filetage hélicoïdal est tel que la contrainte maximum au niveau du fond du filet est considérablement réduite, ce qui permet d'augmenter la durée d'utilisation ou la charge des assemblages, et ce qui, du même coup améliore nettement la sécurité recherchée pour ceux-ci.

A cet effet, l'invention a pour objet un élément fileté, tel que par exemple un élément fileté mâle formant vis, comprenant au moins un filet hélicoïdal dont le fond présente, en section suivant un plan contenant l'axe de l'élément fileté, une forme arrondie ou en arc de cercle se raccordant tangentiellement aux flans du filet, caractérisé en ce que ledit fond du filet, vu suivant ladite section, comporte trois arcs de cercle qui se composent de deux arcs de cercle de rayons égaux raccordés tangentiellement aux flans du filet et, d'un arc de cercle milieu de rayon différent raccordé tangentiellement aux deux arcs de cercle de rayons égaux.

Suivant un mode de réalisation préféré de l'invention, le rayon des deux arcs de cercle de rayons égaux est égal à 0,095 x pas du filetage de l'élément fileté, ces deux arcs de cercle comportant chacun un point de raccordement aux flans du filet dont la distance à l'axe de symétrie de l'élément fileté est égale à 0,156 fois le pas du filetage, tandis que les centres de ces deux arcs de cercle de rayons égaux sont situés sur une droite perpendiculaire au flan du filet au niveau du point de raccordement précité, les rayons des deux arcs de cercle étant définis par la distance entre leurs centres précités et ledit point de raccordement.

Suivant une autre caractéristique de l'invention, l'arc de cercle milieu se raccordant tangentiellement aux deux arcs de cercle de rayons égaux précités, possède un centre situé sur l'axe de symétrie du filet à une distance égale à 1,57 fois le rayon des deux arcs de cercle de rayons égaux, cette distance étant comptée à partir de l'intersection de ces rayons avec ledit axe de symétrie.

La forme particulière du fond du filetage de l'élément fileté selon cette invention conduit avantageusement à une réduction des contraintes qui est supérieure à 10%.

Mais d'autres avantages et caractéristiques de l'invention apparaîtront mieux dans la description détaillée qui suit et se réfère aux dessins annexés, donnés uniquement à titre d'exemple, et dans lesquels :

La figure 1 est une demi-vue en coupe axiale et partielle d'un élément fileté conforme à cette invention ; et

La figure 2 est une vue d'un filet à grande échelle et en section suivant un plan passant par l'axe de l'élément fileté.

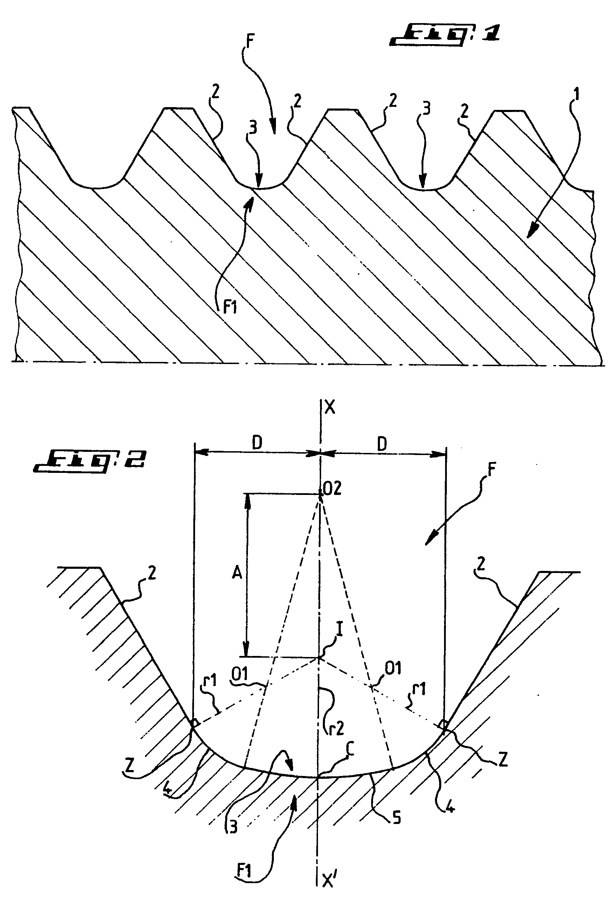

En se reportant aux figures 1 et 2, on voit un élément fileté 1 qui peut revêtir par exemple la forme d'une vis, et qui comprend un filet hélicoïdal F comportant des flans 2 auxquels se raccorde tangentiellement un arrondi 3 formant le fond du filet F.

Conformément à l'invention, et comme on le voit mieux sur la figure 2, le fond 3 du filet est constitué par trois arcs de cercle, à savoir deux arcs de cercle 4 de rayons égaux raccordés tangentiellement aux flans 2 du filet, et un arc de cercle milieu de rayon différent et raccordé tangentiellement aux deux arcs de cercle 4 de rayons égaux.

On a montré en $O_1$ les centres des arcs de cercle 4, lesquels centres sont situés sur une droite perpendiculaire au flan 2 du filet, au niveau du point de raccordement Z des arcs de cercle 4 aux flans 2. Le rayon $r_1$ est donc défini par la distance $O_1Z$.

En outre, la distance D du point de raccordement Z à l'axe de symétrie X-X' du filet sera égale à 0,156 fois le pas du filetage, le rayon $r_1$ des deux arcs de cercle 4 possédant une longueur telle que $r_1 = 0,095$ fois le pas du filetage.

On a montré en $O_2$ sur la figure 2 le centre de l'arc de cercle milieu 5, lequel centre est situé sur l'axe de symétrie X-X' du filet F à une distance A telle que A $= 1,57\ r_1$ comptée à partir de l'intersection I des deux rayons $r_1$ avec ledit axe de symétrie X-X'. On a repéré en $r_2$ sur la figure 2 le rayon de l'arc de cercle milieu 5 qui est défini par la distance $O_2C$.

On comprend donc qu'avec toutes les données ci-dessus, les arcs de cercle 4 et 5 formant le fond du filet F pourront être définis et cela pour différentes valeurs de pas.

C'est ainsi que par exemple pour un pas de 1 mm, $r_1 = 0,095$ mm et $r_2 = 0,301$ mm.

Egalement, pour un pas de 1,5 mm, $r_1 = 0,142$ mm et $r_2 = 0,451$ mm.

Grâce à cette configuration particulière à trois arcs de cercle formant le fond du filetage, on peut obtenir une diminution de 11% de la contrainte maximale dans la partie $F_1$ du fond de filet, dite contrainte de Von MISES.

On a donc réalisé suivant l'invention un profil optimal de filetage grâce à trois arcs de cercle formant le fond du filetage et tels que définis ci-dessus, de façon à réduire notablement le taux de contraintes dans l'élément fileté au niveau du filetage.

Bien entendu, l'invention n'est nullement limitée au mode de réalisation décrit et illustré qui n'a été donné qu'à titre d'exemple.

## Revendications

1. Elément fileté, tel que par exemple un élément fileté mâle formant vis, comprenant au moins un filet hélicoïdal (F) dont le fond (3) présente, en section suivant un plan contenant l'axe de l'élément fileté (1), une forme arrondie se raccordant tangentiellement aux flans (2) du filet, caractérisé en ce que ledit fond (3) du filet, vu suivant ladite section, comporte trois arcs de cercle (4, 5) qui se composent de deux arcs de cercle (4) de rayons égaux ($r_1$) raccordés tangentiellement aux flans (2) du filet et, d'un arc de cercle milieu (5) de rayon ($r_2$) différent raccordé tangentiellement aux deux arcs de cercle de rayons égaux (4).

2. Elément fileté selon la revendication 1, caractérisé en ce que le rayon ($r_1$) des deux arcs de cercle (4) de rayons égaux est tel que $r_1 = 0,095 \times$ pas du filetage de l'élément fileté (1), ces deux arcs de cercle (4) comportant chacun un point de raccordement (Z) au flan du filet dont la distance (D) à l'axe de symétrie (X-X') du filet est égale à 0,156 fois le pas du filetage, tandis que les centres ($O_1$) des arcs de cercle de rayon ($r_1$) sont situés sur une droite perpendiculaire au flan (2) du filet au niveau du point de raccordement (Z), ledit rayon ($r_1$) étant défini par la distance ($O_1Z$).

3. Elément fileté selon la revendication 1 ou 2, caractérisé en ce que l'arc de cercle milieu (5) de rayon ($r_2$) se raccordant tangentiellement aux deux arcs de cercle de rayon ($r_1$) possède un centre ($O_2$) situé sur l'axe de symétrie (X-X') du filet à une distance A telle que $A = 1,57 r_1$ comptée à partir de l'intersection (I) des deux rayons ($r_1$) avec ledit axe de symétrie.

4. Assemblage de pièces quelconques à l'aide d'au moins un élément fileté selon l'une des revendications 1 à 3.

## Ansprüche

1. Gewindeelement, wie zum Beispiel ein mit Aussengewinde versehenes, eine Schraube bildendes Element mit wenigstens einem Wendelgewinde (F), dessen Grund (3) im Schnitt entlang einer die Achse des Gewindeelementes (1) enthaltenden Ebene eine sich tangential an die Flanken (2) des Gewindes anschliessende abgerundete Gestalt aufweist, dadurch gekennzeichnet, dass der besagte Gewindegrund (3) entlang des besagten Schnittes gesehen drei Kreisbogen (4, 5) aufweist, die sich aus zwei tangential an die Flanken (2) des Gewindes angeschlossene Kreisbogen (4) mit gleichen Halbmessern ($r_1$) und aus einem tangential an die beiden Kreisbogen (4) mit gleichen Halbmessern angeschlossenen mittleren Kreisbogen (5) mit einem unterschiedlichen Radius ($r_2$) zusammensetzen.

2. Gewindeelement nach Anspruch 1, dadurch gekennzeichnet, dass der Radius ($r_1$) der beiden Kreisbogen (4) mit gleichen Halbmessern derart ist, dass $r_1 = 0,095 \times$ Gewindeteilung des Gewindeelements (1), wobei diese beiden Kreisbogen (4) jeweils einen Punkt (Z) zum Anschluss an die Gewindeflanke aufweisen, dessen Entfernung (D) von der Symmetrieachse (X-X') des Gewindes gleich 0,156 mal die Gewindeteilung ist, während die Mittelpunkte ($O_1$) der Kreisbogen mit dem Radius ($r_1$) auf einersenkrecht zur Gewindeflanke (2) in Höhe des Anschlusspunktes (Z) verlaufenden Geraden liegen, wobei der besagte Radius ($r_1$) durch en Abstand ($O_1Z$) bestimmt wird.

3. Gewindeelement nach Anspruch 1 oder 2, dadurch gekennzeichnet, dass der sich tangential an die beiden Kreisbogen mit dem Radius ($r_1$) anschliessende mittlere Kreisbogen (5) mit dem Radius ($r_2$) einen Mittelpunkt ($O_2$) besitzt, der auf der Symmetrieachse (X-X') des Gewindes in einem Abstand A wie $A = 1,57 r_1$ gerechnet von dem Schnittpunkt (I) zwischen den beiden Halbmessern ($r_1$) mit der besagten Symmetrieachse liegt.

4. Zusammenbau von irgendwelchen Werkstücken mit Hilfe von wenigstens einem Gewindeelement gemäss einem der Ansprüche 1 bis 3.

## Claims

1. Threaded element such for instance as a male threaded element forming a screw comprising at least one helical thread (F) the root (3) of which exhibits in section along a plane containing the axis of the threaded element (1) a rounded shape connecting tangentially to the flanks (2) of the thread, characterized in that the said root (3) of the thread viewed along the said section comprises three arcs of a circle (4, 5) which consist of two arcs of a circle (4) with equal radii ($r_1$) connecting tangentially to the flanks (2) of the thread and of a middle arc of a circle (5) with a different radius ($r_2$) connected tangentially to both arcs of a circle with equal radii (4).

2. Threaded element according to claim 1, characterized in that the radii ($r_1$) of both arcs of a circle (4) with equal radii are such that $r_1 = 0.095 \times$ thread

pitch of the threaded element (1), these two arcs of a circle (4) comprising each one a point (Z) of connection to the thread flank the distance (D) of which from the axis of symmetry (X-X') of the thread is equal to 0.156 times the thread pitch, whereas the centers ($O_1$) of the arcs of a circle with a radius ($r_1$) are lying on a straight line perpendicular to the thread flank (2) at the point of connection (Z), the said radius ($r_1$) being defined by the distance ($O_1Z$).

3. Threaded element according to claim 1 or 2, characterized in that the middle arc of a circle (5) with the radius ($r_2$) connecting tangentially to both arcs of a circle with a radius ($r_1$) has a center ($O_2$) located on the axis of symmetry (X-X') of the thread at a distance A such that $A = 1.57r_1$ counted from the intersection (I) of both radii ($r_1$) with the said axis of symmetry.

4. Assembly of any parts whatsoever by means of at least one threaded element according to one of claims 1 to 3.

_Fig. 1_

_Fig. 2_